# DEMANDE DE BREVET EUROPEEN

(11) **EP 1 300 675 A1**
(43) Date de publication de la demande: **09.04.2003**
(21) Numéro de dépôt: 02292427.8
(22) Date de dépôt: 03.10.2002
(51) Int. Cl.: G01N 21/77, G01N 21/55

(54) **Capteur optique pour la détection d'au moins une substance chimique et sondes optiques comprenant de tels capteurs optiques**

(30) Priorité: 05.10.2001 FR 0112855
(71) Demandeur: Gharbi, Tijani, 25000 Besancon (FR); Wacogne, Bruno, 70190 Traitie Fontaine (FR); Pieralli, Christian, 25000 Besançon (FR); Humbert, Philippe Gérard Lucien, 25290 Ornans (FR)
(72) Inventeur: Gharbi, Tijani, 25000 Besancon (FR); Wacogne, Bruno, 70190 Traitie Fontaine (FR); Pieralli, Christian, 25000 Besançon (FR); Humbert, Philippe Gérard Lucien, 25290 Ornans (FR)
(74) Mandataire: Garel, Régis

(57) **Abrégé**

Capteur optique pour la détection d'au moins une substance chimique, comprenant une fibre optique (1) comportant, d'une part, un guide d'onde de coeur (2) à l'intérieur duquel se propage une lumière d'excitation produite par une source lumineuse, et d'autre part, une gaine (3) entourant le guide d'onde de coeur (2).

La fibre optique (1) comprend une zone sensible (7) sur laquelle est disposé un matériau attracteur (6) choisi pour attirer sélectivement au moins une substance chimique à détecter, et en ce que la zone sensible (7) de la fibre optique est adaptée pour permettre à la lumière d'excitation d'interagir avec la substance chimique pour produire un rayonnement à détecter.

## Description

La présente invention se rapporte aux capteurs optiques pour la détection d'au moins une substance chimique, et aux sondes optiques comprenant de tels capteurs.

Plus particulièrement, l'invention vise, parmi ces capteurs optiques ceux qui comprennent une fibre optique comportant, d'une part, un guide d'onde de coeur à l'intérieur duquel se propage une lumière d'excitation produite par une source lumineuse, et d'autre part, une gaine entourant le guide d'onde de coeur, le guide d'onde de coeur et la gaine s'étendant entre une première extrémité à partir de laquelle se propage la lumière d'excitation et une deuxième extrémité.

Les fibres optiques sont très couramment utilisées comme capteurs chimiques dans le domaine de l'endoscopie en vue d'analyses biologique ou biochimique.

Ces fibres optiques permettent généralement, par leurs petites dimensions, l'émission d'un faisceau d'excitation produit, par exemple à l'aide d'un laser, ayant un spot d'excitation très localisé afin d'irradier une zone d'un tissu organique ou d'un échantillon susceptible de contenir un type de substances chimiques devant être détectées.

Toutefois, les fibres optiques proposées dans l'art antérieur ont l'inconvénien de détecter difficilement certaines substances chimiques, cet inconvénient étant principalement dû au fait que le faisceau d'excitation est très localisé et que la concentration de certaines substances chimiques devant être détectées est parfois très faible, ce qui ne permet pas d'obtenir en réponse, un signal de retour exploitable sans faire appel à des appareils optiques et électroniques sophistiqués et coûteux pour optimiser et analyser le signal de retour.

La présente invention a pour but de résoudre les problèmes techniques posés par l'état de la technique mentionnée ci-dessus.

Ce but est atteint, selon la présente invention, par le fait que la fibre optique comprend une zone sensible sur laquelle est disposé un matériau attracteur choisi pour attirer sélectivement au moins une substance chimique à détecter, et que la zone sensible de la fibre optique est adaptée pour permettre à la lumière d'excitation d'interagir avec la substance chimique pour produire un rayonnement à détecter.

Grâce à ces dispositions, la fibre optique ou plus exactement sa zone sensible peut être disposée au voisinage de la substance chimique devant être détectée, le matériau attracteur piégeant alors sélectivement la substance chimique devant être détectée pour permettre à la lumière d'excitation d'interagir avec cette substance chimique pour produire un rayonnement à détecter.

Dans des formes de réalisation préférées de l'invention, on a recours, en outre, à l'une et/ou à l'autre des dispositions suivantes :
- la fibre optique est, en outre, adaptée pour propager le rayonnement à détecter, résultant de l'interaction entre la lumière d'excitation et la substance chimique, vers la première et/ou la deuxième extrémités ;
- la zone sensible est formée par la deuxième extrémité de la fibre optique, ladite deuxième extrémité étant clivée et recouverte par le matériau attracteur pour permettre la propagation du rayonnement à détecter vers la première extrémité de la fibre optique ;
- la zone sensible est formée par un évidement réalisé dans la gaine et qui est situé entre les première et deuxième extrémités de la fibre optique, ledit évidement présentant un fond situé au voisinage du guide d'onde de coeur de la fibre optique et le matériau attracteur étant rapporté sur le fond de l'évidement ;
- la deuxième extrémité de la fibre optique est adaptée pour réfléchir le rayonnement à détecter issu de la zone sensible en direction de ladite zone sensible ;
- une couche métallique est interposée entre le fond de l'évidemen de la zone sensible et le matériau attracteur pour obtenir un rayonnement à détecter induit par un phénomène de résonance plasmon ;
- la fibre optique comprend deux zones semi-réfléchissantes disposées de part et d'autre de l'évidement de la zone sensible, les deux zones semi-réfléchissantes étant disposées sensiblement perpendiculairement par rapport au guide d'onde de coeur pour créer une cavité interférométrique ;
- les zones semi-réfléchissantes sont formées par des couches fines réalisées à partir de matériaux semi-réfléchissants ;
- les zones semi-réfléchissantes sont formées par des réseaux de Bragg réalisés dans des sections du guide d'onde de coeur par irradiation ultraviolette.

Par ailleurs, l'invention a également pour objet une sonde optique pour la détection d'au moins une substance chimique qui comprend un support pourvu d'une pluralité de sillons sur lesquels sont rapportées les deuxièmes extrémités de capteur tels que définis ci-dessus.

D'autres caractéristiques et avantages de l'invention apparaîtront au cours de la description qui va suivre de plusieurs de ces formes de réalisation, données à titre d'exemples non limitatifs en regard des dessins joints. Sur les dessins :
- la figure 1 représente une vue schématique en coupe longitudinale du capteur selon un premier mode de réalisation de l'invention,
- la figure 2 représente une vue schématique en coupe longitudinale du capteur selon un second mode de réalisation de l'invention,
- la figure 3 représente une vue schématique en coupe longitudinale du capteur selon un troisième mode de réalisation de l'invention,
- la figure 4 représente une vue schématique en perspective d'une sonde optique conforme à l'invention,
- la figure 5 représente une vue en coupe transversale de la sonde optique représentée sur la figure 4, et
- la figure 6 représente une vue schématique d'un dispositif optique pour la détection et la quantification d'au moins un type de substances chimiques.

Sur les différentes figures, les mêmes références désignent des éléments identiques ou similaires.

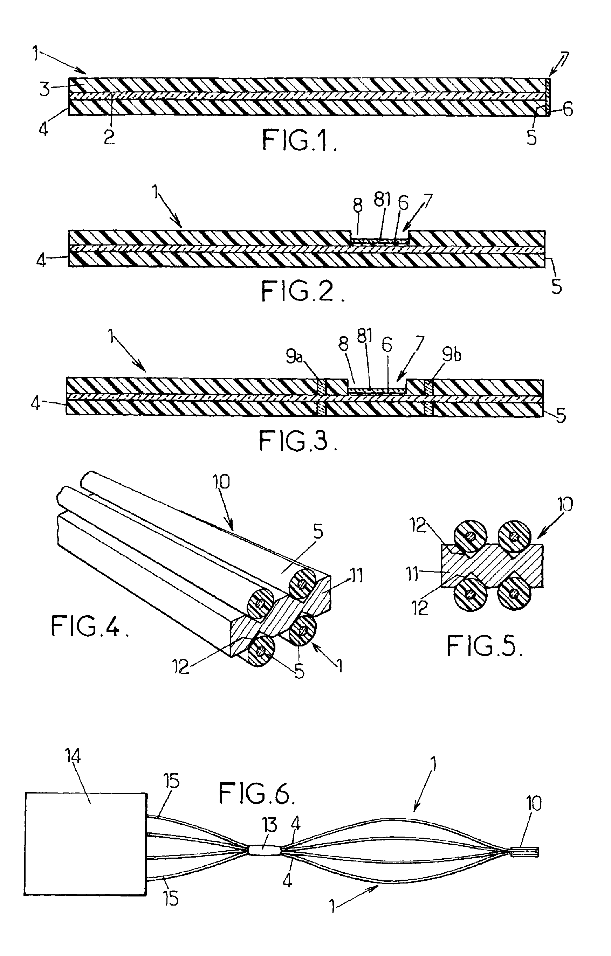

La figure 1 représente le premier mode de réalisation du capteur optique. Ce capteur optique comprend une fibre optique 1 qui se compose d'un guide d'onde de coeur 2 qui est entouré par une gaine 3.

Ce guide d'onde de coeur 2 et la gaine 3 qui l'entoure s'étendent entre une extrémité 4 et une extrémité 5. L'extrémité 4 de la fibre optique 1 est destinée à être reliée à une source lumineuse afin qu'une lumière d'excitation entre dans la fibre optique et se propage le long du guide d'onde de coeur 2 qui peut supporter des angles multiples de propagation de la lumière d'excitation. Cette lumière d'excitation se propage jusqu'à la deuxième extrémité 5 de la fibre optique au niveau de laquelle est rapporté un matériau attracteur 6 formant la zone sensible 7 du capteur optique. Ce matériau, conformément à l'invention, est choisi pour attirer sélectivement des substances chimiques devant être détectées et/ou quantifiées. Ce matériau attracteur 6 qui peut être réalisé au moyen d'un dépôt en couche mince d'un polymère spécifique sur l'extrémité 5 de la fibre optique 1 a pour seule fonction d'attirer et de piéger de manière très sélective la substance chimique à étudier. La substance chimique devant être étudiée est ainsi isolée des autres substances chimiques au moyen du matériau attracteur, ce qui permet ensuite par interaction avec la lumière d'excitation provenant de l'extrémité 4 de la fibre optique 1 de produire un rayonnement à détecter.

A titre d'exemple, dans le cas où la substance à piéger et à capter est une substance de type anticorps ou formée de cellules immunocompétentes telles que des lymphocytes, alors le matériau attracteur 6 peut être réalisé à partir d'antigènes microbiens tels que virus, bactéries, parasites ou mycoses ou alors à partir d'antigènes d'origine endogène (produits par l'organisme vivant) tels que immunoglobulines ou toute substance susceptible de se fixer à un antigène.

De même, dans le cas où la substance chimique à piéger est une substance antigénique et immunogène, le matériau attracteur 6 peut être réalisé à partir d'anticorps antimicrobiens tels que les anticorps anti-virus, anti-bactérie, antiparasite ou antimycosique, ou à partir d'anticorps anti-substance naturelle endogène (produites par l'organisme vivant) tels que les phospholipides cytosines ou des médiateurs cellulaires, ou alors à partir d'anticorps anti-substance d'origine exogène.

Avantageusement, l'extrémité 5 de la fibre optique est également clivée pour permettre à la lumière d'excitation interagissant avec la substance chimique piégée de produire un rayonnement à détecter formant un signal de retour se propageant en direction de l'extrémité 4 qui forme ainsi une extrémité d'entrée et de sortie pour le capteur optique. Selon la substance chimique piégée par le matériau attracteur, la mesure du rayonnement à détecter repose alors sur une détection de phénomènes d'absorption ou de phénomènes de fluorescence suivant le type de détecteur choisi par l'utilisateur.

Selon un deuxième mode de réalisation de l'invention représenté sur la figure 2, la zone sensible 7 de la fibre optique 1 est formée par un évidement 8 situé entre les extrémités 4 et 5 de la fibre optique 1. Cet évidement 8 est réalisé à l'intérieur de la gaine 3 et il comprend un fond 81 qui s'étend jusqu'au voisinage dudit guide d'onde de coeur 2. L'évidement 8 peut être obtenu par exemple par polissage de la gaine 3 ou alors par gravure chimique ou par gravure ionique suivant le matériau utilisé pour réaliser la gaine 3. L'évidement 8 est réalisé de façon à ce que son fond 81 se situe à proximité immédiate du guide d'onde de coeur 2 de la fibre optique de façon à rendre possible une interaction entre l'environnement immédiat de l'évidement 8 et le champ lumineux évanescent qui existe dans cette partie du guide d'onde de coeur 2 de la fibre. Le fond 81 de l'évidement 8 est dimensionné pour recevoir le matériau attracteur 6 d'une ou de certaines substances chimiques à détecter.

Ainsi, suivant la présence ou non de la ou des substances chimiques à détecter, il se produit une interaction entre le champ lumineux évanescent existant dans cette partie du guide d'onde de coeur 2 et la ou les substances chimiques piégées par le matériau attracteur 6. L'interaction qui se manifeste alors entre le champ lumineux évanescent et la ou les substances chimiques à détecter se manifestent sous la forme d'une absorption de la lumière d'excitation se propageant depuis l'extrémité 4 de la fibre optique 1. La lumière d'excitation qui se propage dans le guide d'onde de coeur 2 et au-delà de l'évidement 8 est alors rétro-diffusée par l'extrémité clivée 5 de la fibre optique. La lumière d'excitation rétro-diffusée par l'extrémité clivée 5 de la fibre optique revient alors vers l'évidement 8 et interagit à nouveau avec la ou les substances à étudier qui sont fixées sur le matériau attracteur 6, ce qui multiplie la sensibilité du capteur. En effet, lors de son second passage au niveau de l'évidement 8, la lumière d'excitation retro-diffusée subit un deuxième phénomène d'absorption avant d'être renvoyée vers l'extrémité 4 du capteur.

Selon une variante du second mode de réalisation, une fine couche métallique peut également être interposée entre le fond 81 de l'évidement 8 et le matériau attracteur 6 pour produire un phénomène de résonance plasmon au niveau de l'évidement 8. Ce phénomène de résonance plasmon est particulièrement sensible aux perturbations extérieures situées au niveau du matériau attracteur 6, ce qui autorise la détection et la quantification de quantité de substances chimiques extrêmement faible. Selon cette variante de réalisation, la lumière qui se propage dans le guide d'onde de coeur 2 est également rétro-diffusée par l'extrémité clivée 5 de la fibre optique ce qui permet d'obtenir une deuxième interaction entre la lumière d'excitation et la ou les substances chimiques à étudier. Dans cette variante de réalisation, la détection et la quantification des substances chimiques sont également effectuées par analyse comparative entre la lumière rétro-diffusée sortant de l'extrémité 4 de la fibre optique et la lumière d'excitation entrant dans ladite extrémité 4 afin d'analyser les phénomènes d'absorption de la lumière.

La fibre optique conforme au troisième mode de réalisation de l'invention représenté sur la figure 3, est sensiblement identique à la fibre optique selon le second mode de réalisation, à ceci près qu'elle comprend, en outre, deux zones semi-réfléchissantes 9a, 9b disposées de part et d'autre de l'évidement 8. Ces deux zones semi-réfléchissantes 9a et 9b sont disposées perpendiculairement par rapport au guide d'onde de coeur 2 tout en étant parallèles entre elles pour créer une cavité interférométrique de type Fabry-Pérot.

La réalisation de ces deux zones semi-réfléchissantes 9a et 9b peut être réalisée selon deux méthodes différentes.

Selon une première méthode de réalisation, on dépose par exemple une couche semi-réfléchissante 9b à l'extrémité d'une première fibre optique, puis on soude ensuite cette extrémité de la première fibre sur l'extrémité d'une seconde fibre n'ayant subi aucun traitement particulier. L'autre extrémité de la première fibre est ensuite clivée de façon à ce que la longueur de la première fibre corresponde à la longueur de la cavité interférométrique Fabry-Pérot souhaitée. Il suffit ensuite de souder une troisième fibre sur l'extrémité libre de la première fibre optique. Cette troisième fibre optique aura préalablement subi un traitement semi-réfléchissant sur son extrémité destinée à être reliée à la première fibre optique. On réalise ainsi une cavité interférométrique de type Fabry-Pérot à l'intérieur même de la fibre optique formée par des tronçons de fibres optiques reliés entre eux.

Selon la deuxième méthode de réalisation des zones semi-réfléchissantes 9a, 9b, il suffit de réaliser des réseaux de Bragg dans des sections transversales d'une fibre optique ou du moins dans des sections transversales du guide d'onde de coeur 2 de la fibre optique. Ces réseaux de Bragg sont réalisés par des changements d'indice de réfraction périodiques dans le matériau de la fibre. Ces réseaux de Bragg réfléchissants 9a, 9b sont obtenus par photo-inscription réalisée par une irradiation ultraviolette des sections du guide d'onde de coeur 2 de la fibre. Lorsque la cavité interférométrique de type Fabry-Pérot est obtenue, il suffit ensuite de réaliser l'évidement 8 entre les deux zones semi-réfléchissantes 9a, 9b.

Selon ce troisième mode de réalisation de l'invention, l'analyse du signal de retour ne s'effectue plus à partir de la lumière rétro-diffusée par l'extrémité 5 de la fibre, mais par la lumière réfléchie par la cavité Fabry-Pérot formée par les deux zones semi-réfléchissantes 9a, 9b. Ainsi, le signal à détecter peut être, suivant les cas, récupéré au niveau de l'extrémité 4 ou de l'extrémité 5 de la fibre optique 1.

Avec un capteur selon ce troisième mode de réalisation, la présence ou non de la ou des substances piégées par le matériau attracteur 6 induit un changement de phase de l'onde lumineuse se propageant dans la cavité. Ces variations de phases induites par la ou les substances à étudier sont analysées en mesurant l'amplitude desdites variations de phases qui sont directement proportionnelles à la concentration des substances chimiques.

Les fibres optiques précédemment décrites ayant un diamètre d'environ 125 µm, il est également possible de réaliser des sondes optiques portant plusieurs fibres optiques.

Une telle sonde optique, représentée sur les figures 4 et 5, peut par exemple comprendre un support 10 sur lequel sont rapportés les capteurs ou fibres optiques précédemment décrites. Le support 10 peut par exemple comporter une pluralité de sillons 12 sur lesquels sont rapportées les extrémités 5 des fibres optiques 1. Etant donné la très faible dimension de ces fibres optiques, le support 10 peut être réalisé à partir de silicium et les sillons 12 seront alors obtenus par usinage chimique selon des procédés connus.

Dans l'exemple considéré sur les figures 4 et 5, le support 10 présente une section transversale sensiblement rectangulaire, mais le support 10 peut bien entendu avoir une section différente, telle qu'une section circulaire, sans sortir du cadre de l'invention. De même, le nombre de fibres optiques rapportées sur le support 1 dépend également de l'application à laquelle est destinée la sonde optique. Ainsi, pour une utilisation en endoscopie où la taille habituelle d'un endoscope est de l'ordre de 1 cm, la sonde optique, conforme à l'invention, pourra comprendre plusieurs dizaines de fibres optiques intégrées sur un ou plusieurs supports usinés.

La figure 6 représente un dispositif de détection et de quantification comprenant une sonde optique 10 telle que précédemment définie.

Ce dispositif peut comprendre, par exemple, un coupleur à fibres optiques 13 directement connecté aux extrémités 4 d'une pluralité de fibres optiques 1 conformes à l'invention, le coupleur 13 étant, en outre, relié à des sources lumineuses intégrées dans un boîtier 14 au moyen de fibres optiques classiques 15 afin d'alimenter les fibres optiques 1 en lumière d'excitation. Le signal de retour ou le rayonnement à détecter obtenu au niveau de la sonde optique 10 est également renvoyé vers le coupleur 13 avant d'être reçu dans des systèmes de détection et d'analyse qui pourront être intégrés dans le boîtier 14.

Bien entendu, les systèmes de détection et d'analyse, l'alimentation lumineuse et le coupleur 13 pourront être adaptés suivant la ou les fibres optiques utilisées et les phénomènes à étudier, tels que les phénomènes d'absorption, de fluorescence, de résonance plasmon ou de phénomènes interférométriques dépendant du mode de réalisation des fibres optiques de détection.

## Revendications

1. Capteur optique pour la détection d'au moins une substance chimique, comprenant une fibre optique (1) comportant, d'une part, un guide d'onde de coeur (2) à l'intérieur duquel se propage une lumière d'excitation produite par une source lumineuse, et d'autre part, une gaine (3) entourant le guide d'onde de coeur (2), le guide d'onde de coeur (2) et la gaine (3) s'étendant entre une première extrémité (4) à partir de laquelle se propage la lumière d'excitation et une deuxième extrémité (5), **caractérisé en ce que** ladite fibre optique (1) comprend une zone sensible (7) sur laquelle est disposé un matériau attracteur (6) choisi pour attirer sélectivement au moins une substance chimique à détecter, et **en ce que** la zone sensible (7) de la fibre optique est adaptée pour permettre à la lumière d'excitation d'interagir avec la substance chimique pour produire un rayonnement à détecter.

2. Capteur selon la revendication 1, dans lequel la fibre optique (1) est, en outre, adaptée pour propager le rayonnement à détecter, résultant de l'interaction entre la lumière d'excitation et la substance chimique, vers la première et/ou la deuxième extrémités (4,5).

3. Capteur selon l'une ou l'autre des revendications 1 et 2, dans lequel la zone sensible (7) est formée par la deuxième extrémité (5) de la fibre optique (1), ladite deuxième extrémité (5) étant clivée et recouverte par le matériau attracteur (6) pour permettre la propagation du rayonnement à détecter vers la première extrémité (4) de la fibre optique.

4. Capteur selon l'une ou l'autre des revendications 1 et 2, dans lequel la zone sensible (7) est formée par un évidement (8) réalisé dans la gaine (3) et qui est situé entre les première et deuxième extrémités (4,5) de la fibre optique, ledit évidement (8) présentant un fond (81) situé au voisinage du guide d'onde de coeur (2) de la fibre optique et le matériau attracteur (6) étant rapporté sur le fond (81) de l'évidemen (8).

5. Capteur selon la revendication 4, dans lequel la deuxième extrémité (5) de la fibre optique est adaptée pour réfléchir le rayonnement à détecter issu de la zone sensible (7) en direction de ladite zone sensible (7).

6. Capteur selon l'une ou l'autre des revendications 4 et 5, dans lequel une couche métallique est interposée entre le fond (81) de l'évidement (8) de la zone sensible (7) et le matériau attracteur (6) pour obtenir un rayonnement à détecter induit par un phénomène de résonance plasmon.

7. Capteur selon la revendication 4, dans lequel la fibre optique (1) comprend deux zones semi-réfléchissantes (9a,9b) disposées de part et d'autre de l'évidement (8) de la zone sensible (7) , les deux zones semi-réfléchissantes (9a,9b) étant disposées sensiblement perpendiculairement par rapport au guide d'onde de coeur (2) pour créer une cavité interférométrique.

8. Capteur selon la revendication 7, dans lequel les zones semi-réfléchissantes (9a,9b) sont formées par des couches fines réalisées à partir de matériaux semi-réfléchissants.

9. Capteur selon la revendication 7, dans lequel les zones semi-réfléchissantes (9a,9b) sont formées par des réseaux de Bragg réalisés dans des sections du guide d'onde de coeur (2) par irradiation ultraviolette.

10. Sonde optique pour la détection d'au moins une substance chimique, comprenant un support (11) pourvu d'une pluralité de sillons (12) sur lesquels sont rapportées les deuxièmes extrémités (5) de capteurs (1) selon l'une quelconque des revendications précédentes.
